# EUROPEAN PATENT APPLICATION

(11) **EP 1 796 094 A2**
(43) Date of publication of application: **13.06.2007**
(21) Application number: 06020138.1
(22) Date of filing: 26.09.2006
(51) Int. Cl.: G11B 27/031, H04B 1/38

(54) **Sound effect-processing method and device for mobile telephone**

(30) Priority: 08.12.2005 KR 20050119339
(71) Applicant: Samsung Electronics Co., Ltd., Suwon-si, Gyeonggi-Do (KR)
(72) Inventor: Eom, Young Sek No. 101-704, Samho Apt., Chungcheongbuk-do (KR); Kim, Bo Keun, Nowon-gu Seoul (KR)
(74) Representative: Lang, Johannes

(57) **Abstract**

A method for mixing effect sounds with a music data and storing/replaying the mixed music data using an auxiliary input device equipped at the mobile telephone is provided. The method includes extracting a direction and a displacement range of the auxiliary input device from an input signal, if the signal is input through the auxiliary input device while music data is replayed, applying effects corresponding to the extracted direction and input range to the music data, storing the music data with the applied effects in a temporary memory, and storing the music data with the applied effects as merged music data in a memory according to a user's command.

## Description

### BACKGROUND OF THE INVENTION

### 1. Field of the Invention

The present invention relates to a mobile telephone for a wireless communication system. More particularly, the present invention relates to a method for generating sound effects using an auxiliary input device, and a mobile telephone incorporating the same, which mixes music data that is currently played with a sound effect intended by a user and stores and replays the mixed sound.

### 2. Description of the Related Art

Mobile terminals such as portable cellular phone and a personal digital assistant, among others have been rapidly developed to support additional services such as data communication and internet access as well as voice communication. These mobile terminals also comprise functions of playing various digital music formats. This kind of portable terminal comprising a music replay function is called an MP3 phone.

The mobile telephone is generally equipped with several input means in addition to the keypad for portability as an auxiliary input device. A jog disk is a type of pointing device driver capable of easily moving the cursor in every direction to make a powerful role by using with the keypad in some cases. For example, it is possible to input data with the keypad while selecting a function by moving the cursor using the jog disk. Also, the jog disk facilitates the retrieval of a song by moving the cursor on the MP3 files when using the mobile telephone as the MP3 player. However, the usage of the jog disk is limited to the input function.

Recently, the MP3-supporting terminal comprising a function of mixing the music of MP3 format with the user's voice or the user's choice of sound effects has been developed. However, the mixing function of the conventional MP3 phone is not enough to satisfy many of the user's requirements and it caused the device to be too large to carry. More specifically, the mixing function of the conventional MP3 phone is not capable of producing the sound effects made by Disk Jockeys.

Accordingly, there is a need for an improved method for providing a sound effect-supporting method for a mobile telephone by expanding the function of the jog disk to mixing digital music data.

### SUMMARY OF THE INVENTION

An aspect of exemplary embodiments of the present invention is to address at least the above problems and/or disadvantages and to provide a sound effect-supporting method and device for a mobile telephone by expanding the function of the jog disk to mixing digital music data.

In order to achieve the above object, a method and device for processing sound effects in a mobile telephone are provided where an auxiliary input device is utilized. A direction and a displacement range of the auxiliary input device is extracted from an input signal if the signal is input through the auxiliary input device while a music data being replayed. Effects corresponding to the extracted direction and input range are applied to the music data and the music data is stored with the applied effects in a temporary memory. Also, the music data is stored with the applied effects as merged music data in a memory according to a user's command.

### BRIEF DESCRIPTION OF THE DRAWINGS

The above and other exemplary object, features and advantages of certain exemplary embodiments of the present invention will be more apparent from the following description taken in conjunction with the accompanying drawings, in which:
FIG. 1 is a schematic block diagram illustrating a mobile telephone according to an exemplary embodiment of the present invention;
FIG. 2 is a flowchart illustrating a method for mixing sound effects with music data using the auxiliary input device according to one exemplary embodiment of the present invention;
FIG. 3 is a flowchart illustrating a method for mixing sound effects with music data using the auxiliary input device according to another exemplary embodiment of the present invention; and

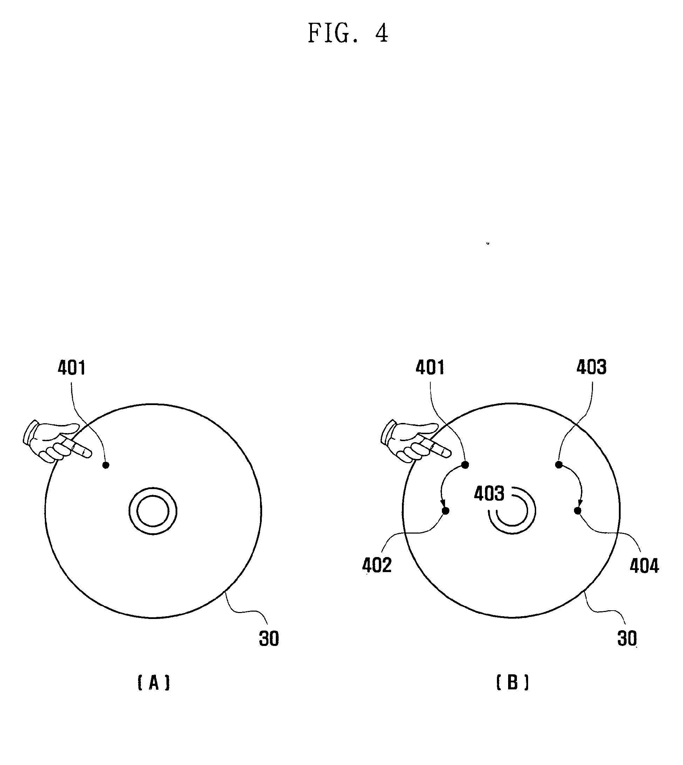

FIG. 4 is an exemplary view illustrating an operation of a jog disk as the auxiliary input device according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

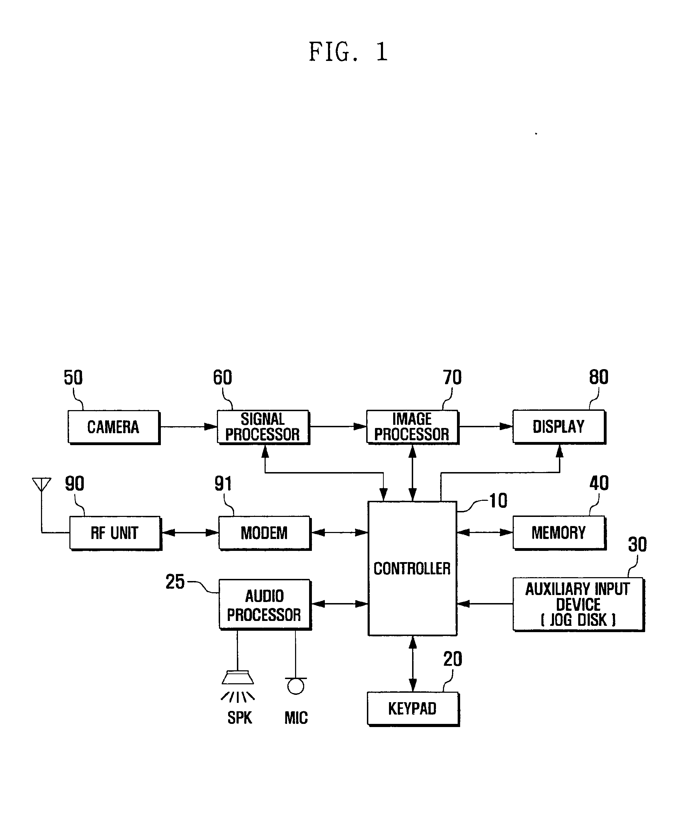

FIG. 1 is a schematic block diagram illustrating a mobile telephone according to an exemplary embodiment of the present invention.

Referring to FIG. 1, the mobile telephone comprises an RF unit 90 for forming communication. The RF unit 90 comprises an RF transmitter which up-converts and amplifies signals to be transmitted and an RF receiver which low-noise amplifies and down-converts the received signals.

The mobile telephone further comprises a modem 91 comprising a transmitter (not shown) which performs encoding and modulation on the signals to be transmitted and a receiver (not shown) which performs demodulation and decoding on the received signals.

The mobile telephone further comprises an audio processor 25 configuring codecs such as a data codec for processing packet data and an audio codec for processing audio signals such as voice signals. The audio processor 25 converts the digital signals received through the modem 91 into analog signals with the audio codec and/or converts the analog signals input through a microphone into the digital audio signals to output to the modem 91. Also, the audio processor 25 may comprise a music data decoder which replays music signals by decoding the input music data and a mixing unit which mixes the music signals decoded by the music data decoder and sound effects generated from an auxiliary input device.

The mobile telephone further comprises a keypad 20 which is provided with a plurality of number and character keys for inputting numbers and characters and function keys for configuring various functions.

Also, the mobile telephone comprises a memory 40 which can be divided into a program memory and a data memory. The program memory stores programs for controlling general operation of the mobile telephone and the auxiliary input device and replaying the music files. The data memory stores the plurality of music data encoded in a predetermined format according to one exemplary embodiment of the present invention.

Also, the mobile telephone comprises an auxiliary input device (jog disk) 30 which is provided with a movement signal generator for generating a movement signal to indicate the movement of a reference point. The movement signal generator of the jog disk 30 outputs the signal of the reference point of the jog disk 30 to the controller 10. The reference point moves by rotating the jog disk in a clockwise or counter clockwise direction. Also, the input signal generator generates a data input request signal and outputs the data input request signal to the controller 10.

The controller 10 controls the overall operations of the mobile telephone and can be integrated with the modem 91 and the codecs. If a certain signal is input from the auxiliary input device 30 while replaying the music data, the controller 10 analyzes direction information of the input signal and executes a function corresponding to the direction information. For example, if a determination is made that the input signal indicates counter clockwise movement of the auxiliary input device, the controller 10 rewinds the presently replaying music by a predetermined amount corresponding to the movement amount of the jog disk. Also, if a determination is made that the input signal indicates clockwise direction movement of the auxiliary input device, the controller 10 moves the replaying point forward corresponding to the movement of the jog disk.

Also, the mobile telephone comprises a camera 50 for taking motion picture, which is provided with a camera sensor for converting the picture into optical or electrical signals. The camera sensor is a CCD sensor.

The mobile telephone further comprises a signal processor 60 which converts the motion picture into image signals. The signal processor can be implemented with a digital signal processor (DSP).

The mobile telephone further comprises an image processor 70 which generates a frame data for displaying the image signals output from the signal processor 60. The image processor 70 transports the image signals received under the control of the controller to a display 80 in a predetermined display standard to expend or retract the frame. According to an exemplary implementation, the display 80 can be a liquid crystal display (LCD). In this case, the display 80 can be provided with an LCD controller, a memory for storing the image data, and an LCD display device. When the LCD is used with touch screen mechanism, the keypad and the LCD become input devices. The display comprises an image display part for outputting the image data.

Now the operation of the mobile telephone will be described with reference to FIG. 1. Once the mobile is set to a transmission mode after dialing is carried out through keypad 20, the controller 10 processes the dial information received through the modem 91 and then outputs the dial information as an RF signal through the RF part 90. If the counterpart subscriber transmits a response signal, the RF part and the modem 91 detects the response signal. In this manner, the voice channel is established through the audio processor 25. When the mobile telephone is in a receive mode, the controller detects the receive mode through the modem 91 and generates a ring signal through the audio processor 25. If an input signal is detected through the microphone, the controller 10 establishes the voice channel through the audio processor 25.

In the transmit and receive modes, only the voice communication is explained. However, data communication can be performed by communicating the packet data and image data. Also, in a wait mode or a short message communication mode, the controller 10 displays the character data processed through the modem on the display 80.

Operation for processing the music data using the auxiliary input device according to one exemplary embodiment of the present invention is described below.

If an input signal is generated by the auxiliary input device (jog disk) according to the user's command while replaying a music file according to a replay signal generated by pushing a replay key on the keypad 20, the controller 10 analyzes the direction information from the input signal and determines the direction is clockwise or counter clockwise. If the signal indicates the movement exceeds a threshold, the controller performs a function corresponding to the direction information.

In this exemplary embodiment of the present invention the direction and movement range information is mentioned. However, velocity information can be added so the replaying speed of the music file can be adjusted according to the velocity of movement of the jog disk.

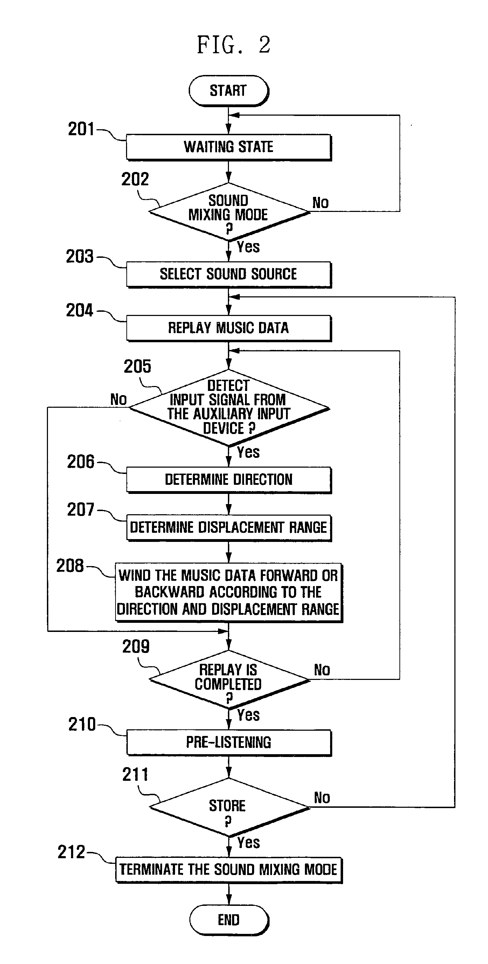

FIG. 2 is a flowchart illustrating a method for mixing effect sounds with music data using the auxiliary input device according to one exemplary embodiment of the present invention. Referring to FIG. 2, once the mobile telephone enters the music data mixing mode according to the keypad input of the user at step 201, the controller 10 detects the mode conversion at step 202 and selects a sound resource to be replaying in the memory at step 203.

At step 203, the user can select from a plurality of music data stored in the memory using the keypad 20 and the auxiliary input device (jog disk) 30. Once a selection of the music data has been made by the user through the keypad 20 or the auxiliary input device (jog disk) 30, the selected music data is replayed at step 204.

Sequentially, a signal is input through the auxiliary input device (jog disk), the controller 10 detects the signals at step 205 and then a determination is made regarding the direction of movement by analyzing the input signal at step 206. That is, the controller 10 recognizes the rotation direction of the jog disk 30 which can be rotated by a finger in a clockwise or counter clockwise direction.

Also, the controller 10 determines movement range, such as, how much the jog disk 30 is rotated, at step 207. According to an exemplary implementation, the movement range is determined with location data generated when the jog disk is initially contacted and then released. According to the movement direction and range of the jog disk, the controller 10 applies corresponding actions to the replaying music data at step 208. That is, if the input signal is generated at the point where the contact is applied and maintained for period (for example, the jog disk is contacted at a point 401 and maintained to the point 402, or from a point 403 to a point 404), the controller 10 performs a rewinding or a forward winding function according to the movement direction and range. If the input signal indicates the clockwise direction and the movement displacement exceeds a threshold amount, the controller replays the music data fast forward by the amount of the movement displacement. Alternatively, if the input signal indicates the counter clockwise direction and the movement displacement exceeds the threshold amount, the controller rewinds the music data by the amount of the movement displacement. The displacement of the movement can be reflected on the display with the progressiveness of the music data or a lyric of the music data when the lyric display function is supported. The controller 10 mixes the sound clips rewound or fast forwarded with the original music data and then stores the mixed music data in the memory 40. After the step 209, the controller 10 can perform a pre-listening function to listen the mixed music data at step 210. Also, the controller 10 stores the mixed music data in the memory according to the user's selection at step 211. After storing the mixed music data, the controller terminates the music mixing mode by controlling the audio processor 25 according to the termination instruction generated by pushing termination key on the keypad 20.

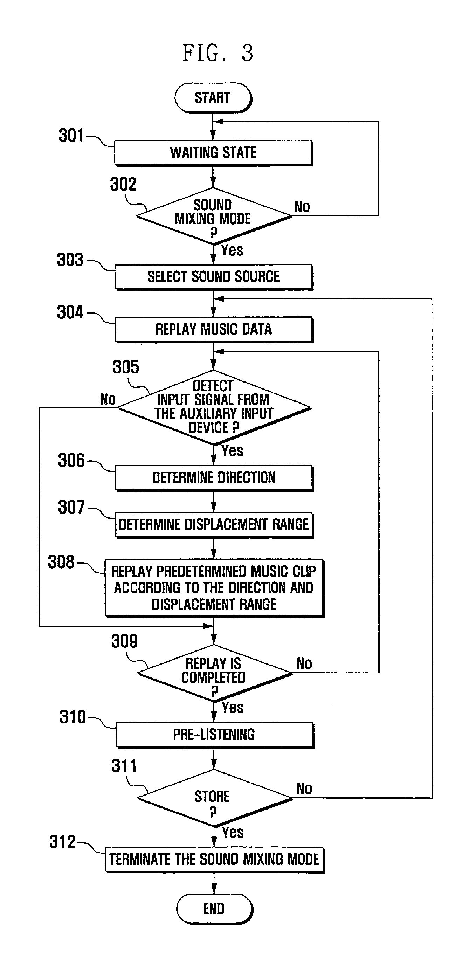

FIG. 3 is a flowchart illustrating a method of mixing sound effects with music data using the auxiliary input device according to another exemplary embodiment of the present invention. In this exemplary embodiment of the present invention, a sound effect clip is previously selected and mixed with the replaying music data according to the adjustment of the auxiliary input device.

Referring to FIG. 3, if a signal requesting a music mixing mode is input by the user through the keypad 20 at step 302, the controller 10 detects the signal and controls the memory to select a sound source and display the stored list of music files at step 303. Sequentially, the controller replays the music data selected from the music files list by the user through the keypad 20 at step 304.

If a signal is input from the auxiliary input device (jog disk) 30 by the user's command, the controller 10 detects the input signal at step 305 and analyzes the input signal to extract the direction information at step 306. That is, if the user's finger is only fixed on the auxiliary input device (jog disk) 30 without movement, the controller 10 recognizes the there is no movement. If there is movement from the contact point in the clockwise or counter clockwise direction, the controller 10 recognizes the rotation direction.

If the signal is determined to comprise the predetermined direction information, the controller 10 replays the predetermined sound data clip as a function corresponding to the direction information.

If the direction information indicates the clockwise direction, the controller 10 determines whether or not the displacement amount of the auxiliary input device (for example, jog disk) 30 exceeds the predetermined threshold amount at step 307. If the displacement amount exceeds the threshold amount, the controller 10 applies the sound effect corresponding to the direction and displacement amount to the sound data clip at step 308. That is, the controller 10 determines a range between the positions where the contact is applied and released to replay a sound data clip predetermined for that range. According to an exemplary implementation, the sound data clip can be the user's voice, sound data edited from other music data, or meaningless sound clip (such as, some sound samples used by DJs for mixing with music). Sequentially, the controller 10 determines whether or not the replaying of the music data is completed and pre-replaying the mixed music data at step 310. The controller 10 determines whether or not to store the mixed music data according to the user's selection at step 311 and stores the mixed music data in the memory 40 if a determination is made that the mixed music data is to be stored, at step 312.

According to an exemplary implementation, the auxiliary input device can be replaced with a touchpad, a touch screen, and a jog shuttle as well as the jog disk.

Also, the rotation displacement range and direction may be adjusted according to the configuration.

As described above, the exemplary embodiment of the present invention provides a method capable of mixing a sound effect with the presently replaying music file using the auxiliary input device (jog disk) so the user may obtain various sound effects-added music data, resulting in improved entertainment and convenience for the user.

While the present invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for processing music data in a mobile telephone, the method comprising:
extracting a direction and a displacement range of an auxiliary input device from an input signal, if the signal is input through the auxiliary input device while music data is replayed;
applying effects corresponding to the extracted direction and displacement range to the music data;
storing the music data comprising the applied effects in a first memory; and
selectively storing the music data comprising the applied effects as merged music data in a second memory.

2. The method of claim 1, wherein the applying of the effects comprises rewinding the music data if the direction comprises a counter clockwise direction.

3. The method of claim 1, wherein the applying of the effects comprises fast forwarding the music data if the direction comprises a clockwise direction.

4. The method of claim 1, wherein the applying of the effects comprises adjusting winding speed according to the displacement range.

5. The method of claim 1, wherein the music data comprising the applied effects and the merged music data are stored in different memory regions.

6. The method of claim 1, wherein the auxiliary input device comprises a jog disk.

7. A method for processing music data in a mobile telephone, the method comprising:
extracting a direction and a displacement range of an auxiliary input device from an input signal, if the signal is input through the auxiliary input device while music data is replayed;
playing the music data with a sound effect corresponding to the direction and the displacement;
storing the music data comprising the sound effect in a first memory; and
storing the music data comprising the sound effect as merged music data in a second memory.

8. The method of claim 7, wherein the sound effect corresponding to the direction and the displacement range is configured according to manipulation of the auxiliary input device.

9. The method of claim 7, wherein the auxiliary input device comprises a jog disk.

10. The method of claim 1, wherein the first memory comprises temporary memory.

11. The method of claim 7, wherein the first memory comprises temporary memory.

12. A mobile telephone comprising:
an auxiliary input device for generating a movement signal to indicate the movement of a reference point;
a controller for extracting direction and displacement information of the auxiliary input device based on the movement signal; and
a memory;
wherein a direction and a displacement range of the auxiliary input device is extracted from an input signal, if the signal is input through the auxiliary input device while music data is replayed;
effects corresponding to the extracted direction and displacement range are applied to the music data;
the music data comprising the applied effects is stored in a first memory; and
the music data comprising the applied effects is selectively stored as merged music data in a second memory

13. The mobile telephone of claim 12, wherein the auxiliary input device comprises a movement signal generator for generating the movement signal.

14. The mobile telephone of claim 13, wherein the movement signal generator outputs a signal of the reference point of the auxiliary input device to the controller.
